# EUROPÄISCHE PATENTSCHRIFT

(11) **EP 2 158 446 B1**
(45) Veröffentlichungstag und Bekanntmachung des Hinweises auf die Patenterteilung: **01.10.2014**
(21) Anmeldenummer: 08784194.6
(22) Anmeldetag: 06.06.2008
(51) Int. Cl.: G01B 11/25, G01B 11/06

(54) **VERFAHREN ZUM ERFASSEN EINER OBERFLÄCHE EINES OBJEKTS**
METHOD FOR DETECTING A SURFACE OF AN OBJECT
PROCÉDÉ DE DÉTECTION D'UNE SURFACE D'UN OBJET

(30) Priorität: 26.06.2007 DE 102007029440
(43) Veröffentlichungstag der Anmeldung: 03.03.2010
(73) Patentinhaber: MTU Aero Engines AG, 80995 München (DE)
(72) Erfinder: BAMBERG, Joachim, 85221 Dachau (DE); HÖFLING, Roland, 09128 Chemnitz (DE); SATZGER, Wilhelm, 80804 München (DE)
(86) Internationale Anmeldenummer: PCT/DE2008/000967
(87) Internationale Veröffentlichungsnummer: WO 2009/000231

(56) Entgegenhaltungen:
- EP-A- 0 947 802
- EP-A- 1 048 393
- EP-A- 1 777 491
- DE-A1- 3 721 247
- US-A- 6 024 449

## Beschreibung

Die Erfindung betrifft ein Verfahren sowie eine Anordnung zum Erfassen einer Oberfläche eines Triebwerksbauteils, insbesondere für Flugzeuge. Typischerweise müssen insbesondere die Oberflächen von Turbinenschaufeln untersucht werden.

Das Erfassen erfolgt optisch: Ein Strahlungsmuster wird auf die Oberfläche projiziert, und dann wird ein Bild der Oberfläche aufgenommen. Unter der Projektion eines Strahlungsmusters ist hierbei zu verstehen, dass der projizierte Strahl im Querschnitt räumliche Intensitätsschwankungen hat. Ein Beispiel für ein Strahlungsmuster ist ein Streifenmuster, bei dem die Intensität der Strahlung entlang einer Achse beispielsweise sinusförmig moduliert ist und längs der Richtung senkrecht hierzu entsprechend dem Wert der sinusförmig modulierten Intensität konstant bleibt. Anstelle eines Streifenmusters kann auch ein Schachbrettmuster verwendet werden. Ist die Oberfläche völlig plan und trifft das Strahlungsmuster genau senkrecht auf die Oberfläche auf, so erhält man in den Bildaufnahmen genau eine Darstellung des abgegebenen Strahlungsmusters. Je mehr die Oberfläche von einer ebenen Oberfläche abweicht, desto stärker wird das Strahlungsmuster verzerrt. Durch eine Bildanalyse kann somit aufgrund der Verzerrung des Strahlungsmusters, durch die auf das Strahlungsmuster zurückgehende Strukturen gebildet werden, auf die Krümmung der Oberfläche zurückgeschlossen werden. Gehört zu der Anordnung eine geeignete Computer-Auswerteeinheit, kann ein dreidimensionales Bild der Oberfläche rechnerisch abgeleitet werden. Regelmäßig wird das Strahlungsmuster zeitlich variiert, damit die Oberfläche besonders präzise abgefahren werden kann.

Es hat sich ergeben, dass bei der optischen Erfassung einer Oberfläche zahlreicher Objekte, zum Beispiel metallischer Objekte, wie es Triebwerksbauteile sind, störende Reflexionen auftreten. Durch die Reflexionen wird die Erkennung der auf das Strahlungsmuster zurückgehenden Strukturen in den Bildern erschwert, und die Stelle der Oberfläche des Objekts von der die Reflexion ausgeht, kann nur schlecht analysiert werden. Um die Reflektionen zu mindern, werden auf die zu untersuchenden Objekte häufig diffus streuende Schichten aufgetragen. Bei Triebwerksbauteilen dürfen jedoch nur bestimmte diffus streuende Schichten verwendet werden, weil diese zulassungspflichtig sind. Das Aufbringen der Schichten ist zeitaufwendig. Sie tragen auch in der Dicke auf, was die Genauigkeit der Oberflächenanalyse beeinträchtigt. Die diffus streuenden Schichten können auch Intensitätsrauschen nicht unterdrücken (häufig als Speckle-Rauschen bezeichnet). Abschließend müssen die diffus streuenden Schichten entfernt werden, was sehr schwierig ist.

Aus den Dokumenten DE 37 21 247 A1, US-A-6 024 449 und EP-A-0 947 802 sind Verfahren zum optischen Erfassen und Vermessen von dreidimensionalen Oberflächen, wie etwa der Hornhaut des Auges oder Bohrungen in Werkzeugen, bekannt. Dabei werden z. B. gitterförmige Strahlungsmuster unter geeigneten Winkeln auf Oberflächen projiziert. Das von der jeweiligen Oberfläche verzerrte und reflektierte Muster wird messtechnisch ausgewertet. Die Bestrahlung kann mittels UV-Licht oder sichtbaren Lichts erfolgen. Neben gitterförmigen Strahlungsmustern sind auch andere periodische Muster, z. B. in SchaChbrettgeometrie oder mit Punkten bekannt.

Aus dem Dokument EP-A-1 048 393 ist ein Verfahren zum optischen Erfassen von Oberflächenfehlern, insbesondere von Rissen von Turbinenkomponenten, bekannt. Der verwendete Fluoreszenzfarbstoff wird nach der Analyse nicht entfernt, sondern verbleibt für Reparaturschritte. Die Begutachtung der Oberflächenfehler erfolgt zunächst im sichtbaren Wellenlängenbereich und dann in einem zweiten Schritt im UV-Licht.

Das Dokument EP-A-1 777 491 offenbart ein Verfahren zum Erfassen einer Oberfläche, wobei die Oberfläche mit elektromagnetischer Strahlung, insbesondere eines LCD oder LCOS-Systems, bestrahlt wird und ein Strahlungsmuster aufgenommen wird. Das Stahlungsmuster kann auch zeitlich verändert aufgenommen werden. Das Verfahren ist frei von der Verwendung jeglicher Fluoreszenzfarbstoffe.

Es ist Aufgabe der Erfindung, ein Verfahren und eine Anordnung zum Erfassen einer Oberfläche eines Triebwerkbauteils, insbesondere eines Triebwerkbauteils wie einer Turbinenschaufel, bereitzustellen, bei dem die genannten Nachteile und Probleme nicht auftreten und insbesondere störende Reflexionen wirksam unterbunden werden.

Die Aufgabe wird durch ein Verfahren mit den Merkmalen gemäß Patentanspruch 1 gelöst.

Somit erfasst das erfindungsgemäße Verfahren zum Erfassen einer Oberfläche eines Triebwerkbauteils folgende Schritte:
a) Aufbringen eines Films aus fluoreszierendem Material, umfassend ein Lösungsmittel mit fluoreszierendem Farbstoff in Lösung und zumindest einen Ester und zumindest einen oberflächenaktiven Stoff, auf die Oberfläche, das bei Bestrahlung mit elektromagnetischer Strahlung aus einem ersten Wellenlängenbereich elektromagnetische Strahlung in einem zweiten Wellenlängenbereich abgibt,
b) Bestrahlen der Oberfläche mit dem Film mit einem Strahlungsmuster (14a, 14b, 14c) unter Verwendung von Ultraviolettstrahlung mit einer definierten Wellenlänge zwischen 400 und 410 nm,
c) Empfangen der von der Oberfläche mit dem Film abgegebenen Strahlung im Wellenlängenbereich sichtbaren Lichts zum Aufnehmen eines Bildes (18a, 18b, 18c) mittels einer Stereobildkamera als Bildaufnahmeeinrichrtung (16),
d) Analysieren der auf Bestrahlungsmuster (14a, 14b, 14c) zurückgehenden Strukturen zum Erfassen der Oberfläche, wobei das Strahlungsmuster (14a, 14b, 14c) zeitlich verändert wird und eine Mehrzahl von Bildern (18a,18b,18c) aufgenommen wird, die das Objekt mit jeweils unterschiedlichem Strahlungsmuster zeigen,
e) Abwaschen des Films aus fluoreszierenden Material von der Oberfläche nach dem Analysieren.

Durch die Verwendung des fluoreszierenden Materials wird es möglich, Strahlungsquelle und Strahlungsempfänger für unterschiedliche Wellenlängenbereiche auszulegen, was zur Folge hat, dass, selbst wenn trotz des an sich per se diffus streuenden Fluoreszenzlichts Reflexionen auftreten, diese in den Bildern nicht oder zumindest nicht so ausgeprägt erscheinen.

Es hat sich auch erwiesen, dass durch die Erfindung das Intensitätsrauschen (Speckle-Rauschen) unterdrückt wird. Der erfindungsgemäße, klassische Fall von Fluoreszenz ist, dass mit Ultraviolettstrahlung mit einer definierten Wellenlänge zwischen 400 nm und 410 nm bestrahlt wird und Licht im sichtbaren Bereich zum Aufnehmen der Bilder empfangen wird. Im Vergleich zur Bestrahlung ebenfalls im sichtbaren Licht wird wegen der Verwendung des kürzerwelligen Ultraviolettlichts hierbei eine höhere Messgenauigkeit erreicht.

Um Reflexionen besonders wirkungsvoll zu unterdrücken wird erfindungsgemäß beim Empfangen der abgegebenen Strahlung ein Filter zum Herausfiltern der Strahlung aus dem ersten Wellenlängenbereich eingesetzt. Dadurch wird zuverlässig vermieden, dass das eingestrahlte Licht, sofern es nicht von dem Film aus fluoreszierendem Material absorbiert wird, sondern reflektiert wird, die Messung (bzw. Erfassung der Oberfläche) beeinträchtigt. Der Filter kann sich über den gesamten Wellenlängenbereich erstrecken, in dem die elektromagnetische Strahlung absorbiert, es genügt aber, ihn so auszulegen, dass er genau die Wellenlängen herausfiltert, mit denen die Oberfläche bestrahlt wird. Letzteres kann ein Teilbereich des ersten Wellenlängenbereichs sein in dem die exakte Wellenlänge festgelegt ist.

Erfindungsgemäß umfasst das fluoreszierende Material ein Lösungsmittel mit fiuoreszierendem Farbstoff in Lösung. Ein solches Fluoreszenzmittel ist für alle Triebwerksbauteile zugelassen und hat insbesondere den Vorteil, leicht und vollständig abwaschbar zu sein. Zu dem Verfahren gehört erfindungsgemäß auch das Abwaschen des Films von der Oberfläche nach dem Analysieren. Besonders effizient ist das fluoreszierende Material, da es zusätzlich zu dem Lösungsmittel und dem fluoreszierenden Farbstoff Ester und oberflächenaktive Stoffe umfasst.

Grundsätzlich kann bei der Gestaltung des Strahlungsmusters auf bekannte Methoden zurückgegriffen werden, nur dass eben Ultraviolettlicht verwendet wird, dessen Intensität räumlich zur Bildung des Strahlungsmusters variiert wird. So kann auch hier das Strahlungsmuster ein Streifenmuster oder ein Schachbrettmuster sein. Das Strahlungsmuster ist erfindungsgemäß zeitveränderlich, vorzugsweise periodisch, sodass eine Mehrzahl von Bildern aufgenommen werden kann, die das Objekt mit jeweils unterschiedlichem aufprojizierten Strahlungsmuster zeigen.

Die erfindungsgemäße Verwendung des Films aus fluoreszierendem Material ermöglicht auch ein Abrastern ("Scannen") des Objekts. Das Strahlungsmuster wird somit nicht als Ganzes auf einmal aufprojiziert, sondern das Bestrahlen des Objektes erfolgt in Teilen (des Strahlungsmusters) in einer zeitlichen Folge.

Die Anordnung zum Erfassen einer Oberfläche eines Triebwerkbauteils umfasst eine Strahlungsmusterprojektionseinrichtung und eine Bildaufnahmeeinrichtung. Die Bildaufnahmeeinrichtung erfasst beim Aufnehmen von Bildern Wellenlängen in einem Wellenlängenbereich elektromagnetischer Strahlung, in dem die Strahlungsmusterprojektionseinrichtung keine elektromagnetische Strahlung abgibt.

Es wurde bereits im Zusammenhang mit dem obigen Verfahren erwähnt, dass die Bildaufnahmeeinrichtung einen Filter umfassen kann, der Wellenlängen aus dem Wellenlängenbereich herausfiltert, in dem die Strahlungsmusterprojektionseinrichtung Strahlung abgibt.

Die Strahlungsmusterprojektionseinrichtung bei der Anordnung zum Erfassen einer Oberfläche eines Triebwerkbauteils unterscheidet sich von herkömmlichen Anordnungen auch dadurch, dass sie eine Ultraviolettlichtquelle umfasst (als einzige Lichtquelle). Grundsätzlich kann beim Aufbau der Strahlungsmusterprojektionseinrichtung auf das Wissen zurückgegriffen werden, wie herkömmliche Strahlungsmusterprojektionseinrichtungen mit Lichtquellen aussehen, die sichtbares Licht abgeben. Bei der Auswahl der Bauteile muss lediglich auf die Vereinbarkeit der Funktionsweise mit der Verwendung von besonders kurzwelligem Licht (Ultraviolettlicht) geachtet werden. Beim Verwenden reflektierender Flächen, z.B. auf Mikrospiegeln von einer digitalen Mikrospiegelvorrichtung (DMD, Digital Micromirror Device), muss darauf geachtet werden, dass diese auch bei dem verwendeten Ultraviolett eine ausreichende Reflektivität aufweisen. Herkömmliche Mikrospiegel sind so beschichtet (mit hoch poliertem Aluminium), dass eine ausreichende Reflektivität von ca. 90 Prozent auch noch im nahen Ultraviolett gegeben ist. Die Mikrospiegelanordnung arbeitet bei reduziertem Druck in einer speziellen Gasmischung und ist hermetisch abgeschlossen und daher hinter einem Fenster angeordnet. Naturgemäß sollte gewährleistet sein, dass dieses Fenster auch für die verwendete Ultraviolettstrahlung hochtransparent ist.

Wie bei bekannten Anordnungen zum optischen Erfassen von Oberflächen eines Objekts kann die Strahlungsmusterprojektionseinrichtung eine Laserlichtquelle umfassen. Vorzugsweise wird jedoch nunmehr ein Laser im Bereich des nahen Ultravioletts oder auch des fernen Violetts, zum Beispiel mit einer definierten Wellenlänge von zwischen 400 und 410 nm verwendet.

Die Oberfläche eines Triebwerkbauteils (wie einer Turbinenschaufel) wird zudem erstmals mit einem abwaschbaren Film aus fluoreszierendem Material überzogen.

Nachfolgend wird eine bevorzugte Ausführungsform der Erfindung unter Bezug auf die Zeichnung beschrieben, wobei die Figur eine Anordnung zur Durchführung des erfindungsgemäßen Verfahrens zum Erfassen einer Oberfläche eines Triebwerkbauteils und die abgegebenen und empfangenen Muster veranschaulicht.

Eine im Ganzem mit 10 bezeichnete Anordnung zum optischen Erfassen einer Oberfläche eines Triebwerkbauteils weist eine in der Figur schematisch gezeigte Strahlungsmusterprojektionseinrichtung 12 auf, die ultraviolette Strahlung abgibt, der ein Muster aufgeprägt ist. Gezeigt ist als Beispiel ein Streifenmuster 14a, wobei die Intensität der Strahlung senkrecht zum Verlauf des Streifens sinusförmig moduliert ist und längs der Streifenerstreckung räumlich konstant bleibt. Das Strahlungsmuster variiert zeitlich, d.h. die Streifen wandern. Zeitlich auf das Streifenmuster 14a folgende Streifenmuster 14b und 14c sind in der Figur ebenfalls gezeigt.

Da hier zur Erzeugung der Streifenmuster 14a, 14b und 14c Ultraviolettstrahlung verwendet wird, kann grundsätzlich beim Aufbau der Strahlungsmusterprojektionseinrichtung 12 auf das Wissen über den Aufbau herkömmlicher Strahlungsmusterprojektionseinrichtungen zurückgegriffen werden. Die Bauteile müssen an die Verwendung von Ultraviolett angepasst werden. Dies beginnt mit einer Ultraviolettlichtquelle, nämlich einem geeigneten Ultraviolettlaser. Anstelle von direktem Ultraviolett kann auch sichtbares Licht an der Grenze zum Ultraviolett, zum Beispiel mit einer Wellenlänge von 405 nm verwendet werden. Die digitalen Mikrospiegelvorrichtungen aus herkömmliche Strahlungsmusterprojektionseinrichtungen können grundsätzlich verwendet werden: beispielsweise bietet die Firma Texas Instruments einen speziellen Chip an, bei dem im Fertigungsprozess ein UV-Fenster eingesetzt wird, das bis 350 nm Wellenlänge, also für Ultraviolett ebenfalls hochtransparent ist. Die Mikrospiegel sind mit hochpoliertem Aluminium beschichtet und weisen eine Reflektivität von ca. 90 Prozent auf, und zwar auch noch im nahen Ultraviolett.

Das nun zu untersuchende Triebwerkbauteil (in der Figur nicht eigens gezeigt) ist nun im Bereich der untersuchenden Oberfläche mit einer Mischung aus einem Lösungsmittel, Estern und oberflächenaktiven Stoffen mit fluoreszierenden Farbstoffen in Lösung überzogen. Eine solche Mischung ist von der Anmelderin unter dem Namen ARDROX 970 P 24 bekannt.

Durch das fluoreszierende Material auf der zu untersuchenden Oberfläche des Triebwerkbauteils wird das UV-Licht absorbiert, und sichtbares Licht wird emittiert. Das sichtbare Licht gelangt zu einer Bildaufnahmeeinrichtung 16, die wie bei herkömmlichen Anordnungen zum optischen Erfassen einer Oberfläche eines Objekts gebaut sein kann und einen Filter zum Wegfiltern des von der Strahlungsmusterprojektionseinrichtung 12 ausgehenden Lichts umfasst. Durch die Bildaufnahmeeinrichtung 16, die eine Stereokamera ist, wird eine Folge von Bildern 18a, 18b, 18c aufgenommen, wobei diese jeweils den Streifenmustern 14a, 14b und 14c zugeordnet sind, was durch zeitliche Koordinierung der Strahlungsmusterprojektionseinrichtung 12 und der Bildaufnahmeinrichtung 16 in der Anordnung 10 möglich ist. Die Anordnung 10 umfasst eine nicht eigens gezeigte Computer-Auswerteeinheit, die aufgrund der Zuordnung der aufgenommenen Bilder zu den Streifenmustern die dreidimensionale Kontur der Oberfläche berechnet, sodass das Ziel des Verfahrens erreicht wird.

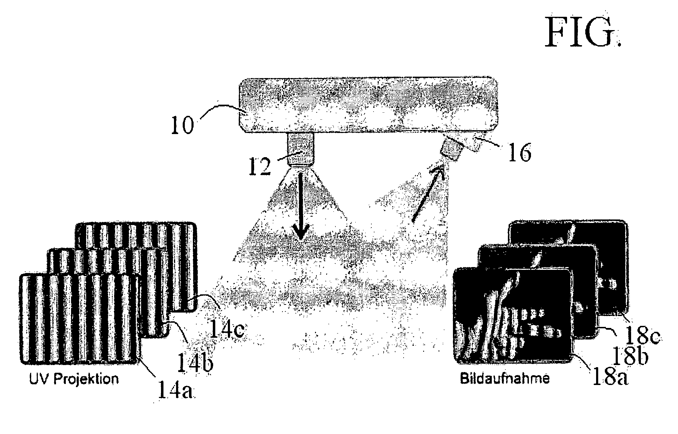

Die Bilder 18a bis 18c zeigen als Objekt eine Hand. Hauptanwendungsgebiet der Erfindung ist die Oberflächenanalyse von Triebwerkbauteilen von Turbinenschaufeln. Die dargestellte Hand soll nur das Verständnis der Erfindung erleichtern.

Durch die erfindungsgemäße Trennung der Wellenlängenbereiche der abgestrahlten Strahlung (Ultraviolett) und der empfangenen Strahlung (sichtbares Licht) gibt es in den Bildaufnahmen 18a, 18b, 18c keine störenden Reflexionen mehr. Auch das Intensitätsrauschen (Speokle-Rauschen) ist unterdrückt. Wegen der Verwendung der kurzwelligen Ultraviolettstrahlung wird auch eine besonders hohe Bildauflösung erzielt.

## Patentansprüche

1. Verfahren zum Erfassen einer Oberfläche eines Triebwerkbauteils mit den Schritten:
a) Aufbringen eines Films aus fluoreszierendem Material, umfassend ein Lösungsmittel mit fluoreszierendem Farbstoff in Lösung und zumindest einen Ester und zumindest einen oberflächenaktiven Stoff, auf die Oberfläche, das bei Bestrahlung mit elektromagnetischer Strahlung aus einem ersten Wellenlängenbereich elektromagnetische Strahlung in einem zweiten Wellenlängenbereich abgibt,
b) Bestrahlen der Oberfläche mit dem Film mit einem Strahlungsmuster (14a,14b,14c) unter Verwendung von Ultraviolettstrahlung mit einer definierten Wellenlänge zwischen 400 und 410 nm,
c) Empfangen der von der Oberfläche mit dem Film abgegebenen Strahlung im Wellenlängenbereich sichtbaren Lichts zum Aufnehmen eines Bildes (18a, 18b, 18c) mittels einer Stereobildkamera als Bildaufnahmeeinrichrtung (16),
d) Analysieren der auf Bestrahlungsmuster (14a,14b,14c) zurückgehenden Strukturen zum Erfassen der Oberfläche, wobei das Strahlungsmuster (14a,14b,14c) zeitlich verändert wird und eine Mehrzahl von Bildern (18a, 18b, 18c) aufgenommen wird, die das Objekt mit jeweils unterschiedlichem Strahlungsmuster zeigen,
e) Abwaschen des Films aus fluoreszierenden Material von der Oberfläche nach dem Analysieren.

2. Verfahren nach Anspruch 1, bei dem beim Empfangen der von der Oberfläche des Objekts abgegebenen Strahlung ein Filter zum Herausfiltern von Strahlung aus dem ersten Wellenlängenbereich eingesetzt wird.

3. Verfahren nach Anspruch 1 oder 2, **dadurch gekennzeichnet, dass** das Strahlungsmuster (14a, 14b, 14c) periodisch aufgenommen wird.

4. Verfahren nach einem der vorgehenden Ansprüche, **dadurch gekennzeichnet, dass** das Strahlungsmuster (14a, 14b, 14c) ein Streifenmuster ist.

5. Verfahren nach einem der Ansprüche 1 bis 4, **dadurch gekennzeichnet, dass** das Strahlungsmuster ein Schachbrettmuster ist.

6. Verfahren nach einem der Ansprüche 1 bis 4, **dadurch gekennzeichnet, dass** das Bestrahlen des Triebwerkbauteils in Teilen in zeitlicher Folge erfolgt.

## Claims

1. Method for detecting a surface of an engine component having the steps:
a) application, to the surface, of a film of fluorescent material which comprises a solvent with fluorescent dye in solution and at least one ester and at least one surface-active substance and which upon irradiation with electromagnetic radiation from a first wavelength range emits electromagnetic radiation in a second wavelength range,
b) irradiation of the surface having the film with a radiation pattern (14a, 14b, 14c) with use of ultraviolet radiation having a defined wavelength between 400 and 410 nm,
c) reception of the radiation emitted from the surface having the film in the wavelength range of visible light in order to record an image (18a, 18b, 18c) by means of a stereo-imaging camera as an imagerecording device (16),
d) analysis of the structures going back to irradiation patterns (14a, 14b, 14c) in order to detect the surface, wherein the radiation pattern (14a, 14b, 14c) is varied over time, and a plurality of images (18a, 18b, 18c) is recorded showing the object with respectively different radiation patterns,
e) washing off of the film of fluorescent material from the surface after the analysis.

2. Method according to claim 1, in which during the reception of the radiation emitted from the surface of the object a filter is used to filter out radiation from the first wavelength range.

3. Method according to claim 1 or 2, **characterised in that** the radiation pattern (14a, 14b, 14c) is recorded periodically.

4. Method according to one of the preceding claims, **characterised in that** the radiation pattern (14a, 14b, 14c) is a striped pattern.

5. Method according to one of claims 1 to 4, **characterised in that** the radiation pattern is a checkerboard pattern.

6. Method according to one of claims 1 to 4, **characterised in that** the irradiation of the engine component is effected in parts in a temporal sequence.

## Revendications

1. Procédé de détection d'une surface d'un objet, en particulier d'un composant d'un réacteur, comprenant les étapes suivantes :
a) application sur la surface d'un film en matière fluorescente comprenant un solvant avec un colorant fluorescent en solution, au moins un ester et au moins une substance tensio-active, ladite matière émettant un rayonnement électromagnétique dans une deuxième longueur d'onde en cas d'irradiation par un rayonnement électromagnétique dans une première longueur d'onde,
b) irradiation de la surface avec le film par un motif de rayonnement (14a, 14b, 14c), en recourant à un rayonnement ultraviolet dans une longueur d'onde définie comprise entre 400 et 410 nm,
c) réception du rayonnement dans la plage de longueur d'onde de la lumière visible émis par la surface avec le film pour l'enregistrement d'une image (18a, 18b, 18c) au moyen d'une caméra à image stéréo en tant que dispositif d'enregistrement d'image (16),
d) analyse des structures revenant au motif de rayonnement (14a, 14b, 14c) pour la détection de la surface, le motif de rayonnement (14a, 14b, 14c) étant modifié dans le temps et une pluralité d'images (18a, 18b, 18c) représentant l'objet avec des motifs de rayonnement différenciés étant enregistrées,
e) élimination par lavage du film en matière fluorescente de la surface après analyse.

2. Procédé selon la revendication 1, où à la réception du rayonnement émis par la surface de l'objet, un filtre est mis en place pour filtrer le rayonnement de la première longueur d'onde.

3. Procédé selon la revendication 1 ou 2, **caractérisé en ce que** le motif de rayonnement (14a, 14b, 14c) est périodiquement enregistré.

4. Procédé selon l'une des revendications précédentes, **caractérisé en ce que** le motif de rayonnement (14a, 14b, 14c) est un motif à bandes.

5. Procédé selon l'une des revendications 1 à 4, **caractérisé en ce que** le motif de rayonnement est un motif en échiquier.

6. Procédé selon l'une des revendications 1 à 4, **caractérisé en ce que** l'irradiation du composant de réacteur est effectuée par parties suivant une succession temporelle.
